# EUROPÄISCHE PATENTSCHRIFT

(11) **EP 3 575 191 B1**
(45) Veröffentlichungstag und Bekanntmachung des Hinweises auf die Patenterteilung: **07.07.2021**
(21) Anmeldenummer: 19176143.6
(22) Anmeldetag: 23.05.2019
(51) Int. Cl.: B62D 33/06

(54) **VERBINDUNGSELEMENT FÜR EIN DÄMPFUNGSSYSTEM EINER FAHRERKABINE**
CONNECTING ELEMENT FOR A DAMPING SYSTEM OF A DRIVER 'S CAB
ÉLÉMENT DE RACCORDEMENT POUR UN SYSTÈME D'AMORTISSEMENT D'UNE CABINE DE CONDUCTEUR

(30) Priorität: 29.05.2018 DE 102018112776
(43) Veröffentlichungstag der Anmeldung: 04.12.2019
(73) Patentinhaber: CLAAS Tractor SAS, 78141 Vélizy-Villacoublay Cedex (FR)
(72) Erfinder: Barentin, Magali, 78810 Montgny le Bretonneurx (FR); Heilles, Yves, 94429 Le Plessis Trévise (FR); Alquier, Eric, 91120 Draveil (FR)
(74) Vertreter: CLAAS Gruppe

(56) Entgegenhaltungen:
- EP-A1- 0 426 510
- EP-A1- 3 300 994
- WO-A1-2018/061475
- US-A- 4 515 234

## Beschreibung

Die vorliegende Erfindung betrifft ein Verbindungselement für ein Dämpfungssystem einer Fahrerkabine gemäß dem Oberbegriff des Anspruches 1. Des Weiteren betrifft die vorliegende Erfindung ein landwirtschaftliches Fahrzeug gemäß dem Oberbegriff des Anspruches 11.

Verbindungselemente für ein Dämpfungssystem und ein landwirtschaftliches Fahrzeug der eingangs genannten Art sind aus der EP 0 426 510 A1 bekannt. Dabei umfasst das Dämpfungssystem vier elastisch verformbare Elemente, die zwischen einer Kabine und einem Fahrzeugrahmen, gegenüber dem die Fahrzeugkabine gelagert ist, angeordnet sind. Ein hinteres Paar dieser Elemente ist mit der hinteren Kabinenbasis durch eine hintere Querstrebe verbunden. Ein vorderes Paar dieser Elemente ist jeweils durch Halteelemente mit der vorderen Kabinenbasis verbunden, wobei die Halteelemente mittels Längsstreben, die sich in Längsrichtung des Dämpfungssystems erstrecken, zusätzlich an einem hinteren Querträger angelenkt sind, der an dem Fahrzeugrahmen befestigt ist. Über Verbindungselemente in Form von Verbindungshaltern und Trägern sind die elastischen Elemente an der Kabine angeordnet. Nachteilig bei dem offenbarten Dämpfungssystem ist, dass eine Vielzahl von Elementen aufwändig miteinander und mit dem Fahrzeugrahmen sowie der Kabine verbunden werden müssen, sowie der benötigte Bauraum für das Dämpfungssystem. Besonders ein Anpassen des Dämpfungssystems an unterschiedliche Kabinenformen oder unterschiedliche elastische Elemente verursacht aufgrund der Vielzahl an unterschiedlichen Elementen einen hohen konstruktiven und monetären Aufwand.

Ein gattungsgemäßes Verbindungselement für ein Dämpfungssystem ist aus der EP 3 300 994 A1 bekannt.

Es ist daher die Aufgabe der vorliegenden Erfindung, ein Verbindungselement für ein Dämpfungssystem bereitzustellen, welches neben einer Vereinfachung der Montage eine Reduzierung des benötigten Bauraumes ermöglicht.

Die Lösung der Aufgabe erfolgt erfindungsgemäß durch die kennzeichnenden Merkmale des Anspruches 1. Vorteilhafte Ausgestaltungen der Erfindung sind in den Unteransprüchen angegeben.

Ein Verbindungselement für ein Dämpfungssystem zur Lagerung einer Kabine, insbesondere eines landwirtschaftlichen Fahrzeuges, umfasst ein Lagerelement mit einem Montagebereich zur Aufnahme eines mit der Kabine verbindbaren ersten Dämpfungsmittels zur Dämpfung einer Bewegung der Kabine gegenüber einem Fahrzeugrahmen, und ein fahrzeugseitiges Tragelement, an dem das Lagerelement in montiertem Zustand angeordnet ist. Gemäß der Erfindung weist das Lagerelement einen ersten Befestigungsbereich und einen zweiten Befestigungsbereich auf, welche in einem montierten Zustand mit dem Tragelement, insbesondere mit einem ersten Widerlager und einem zweiten Widerlager des Tragelementes, verbunden sind, wobei der erste Befestigungsbereich und der zweite Befestigungsbereich derart angeordnet und ausgebildet sind, dass diese, insbesondere in vertikaler Richtung, in entgegengesetzte Richtungen weisen.

Die entgegengesetzt weisenden Befestigungsbereiche haben den Vorteil, dass ein montiertes Verbindungselement durch eine senkrecht zu den Befestigungsbereichen auf den Montagebereich, insbesondere in eine vertikale Richtung, wirkende Kraft selbsthemmend ausgebildet ist, wodurch das Verbindungselement konstruktiv einfacher ausgelegt werden kann und ein geringeren Bauraum benötigen kann. Zudem können durch eine Anpassung des Lagerelementes unterschiedliche Dämpfungsmittel und unterschiedliche Kabinentypen verbaut werden. Dies ermöglicht eine Vereinfachung der Montage, insbesondere der Kabine und des Dämpfungssystems der Kabine. Zudem können durch den Einsatz des Verbindungselementes, insbesondere durch gleichbleibende Tragelemente, durch höhere Stückzahlen Kosten reduziert werden.

Gemäß der Erfindung sind der erste Befestigungsbereich, der zweite Befestigungsbereich und/oder der Montagebereich des Lagerelementes im Wesentlichen in horizontaler Richtung versetzt zueinander angeordnet, wobei der erste Befestigungsbereich in vertikaler Richtung unterhalb des zweiten Befestigungsbereiches angeordnet ist. Aufgrund der im Wesentlichen waagerechten Erstreckung des Verbindungselementes und der im Wesentlichen in horizontaler Richtung versetzt zueinander angeordneten Bereiche kann eine sehr bauraumsparende Anordnung des Verbindungselementes auch mit unterschiedlichen Dämpfungsmitteln ermöglicht werden.

In einer weiter bevorzugten Ausgestaltung der Erfindung ist der Montagebereich in Vertikaler Richtung auf gleicher Höhe, oberhalb oder unterhalb des ersten und/oder zweiten Befestigungsbereiches angeordnet. Dies ermöglicht durch eine Anpassung der Lage des Montagebereiches eine Aufnahme von ersten Dämpfungsmitteln unterschiedlicher Länge, so dass die Flexibilität zur Aufnahmen von unterschiedlichen ersten Dämpfungsmitteln erhöht werden kann. Hierbei können für unterschiedliche erste Dämpfungsmittel kostengünstig und bei geringem Konstruktionsaufwand und Montageaufwand jeweils passende Lagerelemente eingesetzt werden.

Vorzugsweise weist das Lagerelement mindestens an einer Seite eine Verstrebung auf, welche sich zumindest teilweise entlang des ersten Befestigungsbereiches, des zweiten Befestigungsbereiches und/oder des Montagebereiches erstreckt. Durch die zumindest teilweise Anordnung einer Verstrebung an einem oder mehreren Bereichen kann dort jeweils ein Profil ausgebildet werden, wodurch die Steifigkeit und Festigkeit des jeweiligen Bereiches erhöht werden kann.

Besonders bevorzugt ist die Verstrebung den ersten Befestigungsbereich und den Montagebereich verbindend ausgebildet, wobei insbesondere die Verstrebung beabstandet zu dem zweiten Befestigungsbereich verläuft. Hierdurch kann der das Tragelement im Bereich des zweiten Befestigungsbereichs von dem Lagerelement umschlossen werden, was den Vorteil bietet, dass ein unbeabsichtigtes Lösen oder Verlieren des Lagerelementes vermieden werden kann.

Weiterhin ist vorteilhafterweise ein Verbindungssteg vorgesehen, welcher den Montagebereich, den ersten Befestigungsbereich und/oder den zweiten Befestigungsbereich, insbesondere in einer vertikalen Richtung, verbindet. Hierdurch kann die Festigkeit des Lagerelementes verbessert werden. Der Verbindungssteg kann derart ausgestaltet und angeordnet sein, dass der zweite Befestigungsbereich im Wesentlichen durch das Lagerelement und insbesondere den Verbindungssteg umschlossen sein kann, so dass das Lagerelement bei einem Lösen von Befestigungsmitteln, beispielsweise Schrauben, mit denen es an dem Tragelement befestigt sein kann, nicht von diesem abfallen und verloren gehen kann.

Vorteilhafterweise ist ein Tragelement lösbar mit dem Fahrzeugrahmen verbindbar oder einstückig mit diesem ausgebildet. Ein lösbar an dem Fahrzeugrahmen befestigtes Tragelement ermöglicht eine einfache Anpassung des Verbindungselementes an beispielsweise ein verändertes erstes Dämpfungsmittel. Bei einer mit dem Fahrzeugrahmen einstückigen Ausgestaltung kann beispielsweise durch insbesondere schlitzförmige Öffnungen in Fahrzeugrahmen eine Lagerung des ersten und zweiten Befestigungsbereiches des Lagerelementes ermöglicht werden. Mit den Befestigungsbereichen des Lagerelementes zusammenwirkende Widerlager können dabei durch den Fahrzeugrahmen gebildet werden. Die Integration des Tragelementes in den Fahrzeugrahmen bietet den Vorteil einer weiteren Bauraumreduzierung und Kostenreduzierung.

In einer bevorzugten Ausgestaltung der Erfindung ist das Tragelement in Form eines geschlossenen, insbesondere ringförmigen, oder geöffneten, insbesondere U-förmigen, Profils ausgebildet. Das Tragelement kann an dem Fahrzeugrahmen, insbesondere seitlich, angeordnet sein. Durch das geschlossene Profil kann eine Lagerung des Lagerelementes besser an dessen Geometrie, an unterschiedliche Fahrzeugrahmen und die auftretenden Kräfte angepasst werden und ermöglicht zudem eine breitere horizontale Ausbildung des Verbindungselementes. Das Tragelement weist insbesondere profilseitig mindestens ein erstes Widerlager zum Zusammenwirken mit einem ersten Befestigungsbereich des Lagerelementes auf. Das geöffnete, insbesondere U-förmige, Profil hat den Vorteil, dass die Montage des Lagerelementes durch einen besseren Zugang vereinfacht werden kann, da diese beispielsweise unabhängig von der Montage des Tragelementes erfolgen kann.

Das Tragelement in Form eines geöffneten, insbesondere U-förmigen, Profils weist vorteilhafterweise einen, insbesondere lösbaren, Verbindungsriegel zum Schließen des Profils auf, wobei insbesondere der Verbindungsriegel mit dem zweiten Befestigungsbereich zusammenwirkt. Der lösbare Verbindungsriegel weist ein zweites Widerlager zum Zusammenwirken mit dem zweiten Befestigungsbereich des Lagerelementes auf. Der Verbindungsriegel kann zusammen mit einer Montage der Kabine erfolgen und separat von der Montage des Tragelementes, wodurch die Montage vereinfacht werden kann.

Vorzugsweise ist zwischen dem Lagerelement und dem Tragelement mindestens ein zweites Dämpfungsmittel angeordnet. Das zweite Dämpfungsmittel kann jeweils zwischen dem ersten Befestigungsbereich und dem zweiten Befestigungsbereich des Lagerelementes und dem Tragelement angeordnet sein. Weiterhin kann das zweite Dämpfungsmittel zwischen einem ersten Dämpfungsmittel und dem Montagebereich des Lagerelementes angeordnet sein. Das zweite Dämpfungsmittel kann beispielsweise in Form eines elastischen Gummidämpfers ausgebildet sein. Das zweite Dämpfungsmittel hat den Vorteil, dass eine Übertragung von Vibrationen zwischen dem Tragelement und dem Lagerelement gedämpft werden können. Zudem weist dieser, insbesondere in vertikaler Richtung, nur eine sehr geringe Erstreckung auf, wodurch der benötigte Bauraum geringgehalten werden kann.

In einer weiterhin bevorzugten Ausgestaltung ist das Lagerelement und/oder das Tragelement vollständig oder zumindest teilweise in Form eines Blechbauteils und/oder eines Gußbauteils ausgebildet. Die Ausbildung in Form eines Blechbauteils ermöglicht eine kostengünstige Fertigung, insbesondere für unterschiedliche Formen von Kabinen. Durch ein Verbindungselement in Form eines Gußbauteils ist das Verbindungselement besonders gut an aufzunehmende Kräfte anpassbar. Durch ein mehrteilig ausgebildetes Verbindungselement, beispielsweise mit Blechteilen und Gußteilen, wird eine kostengünstige und flexible Anpassung des Verbindungselementes an die gegebenen Randbedingungen wie Kosten, verfügbarer Bauraum und aufzunehmende Kräfte ermöglicht.

Weiterhin wird die eingangs gestellte Aufgabe durch ein landwirtschaftliches Fahrzeug, insbesondere Traktor, mit einer an einer Karosserie gelagerten Kabine gelöst, welches zur Lagerung der Kabine mindestens ein wie vorstehend beschriebenes und ausgebildetes Verbindungselement aufweist.

Nachfolgend wird die Erfindung unter Bezugnahme auf die anliegenden Zeichnungen näher erläutert.

Es zeigen:
- Fig. 1:: eine schematische perspektivische Ansicht eines Verbindungselementes mit einem ersten Dämpfungsmittel;
- Fig. 2:: eine perspektivische Schnittansicht des Verbindungselementes mit einem an einem Tragelement angeordneten Lagerelement;
- Fig. 3:: eine perspektivische Ansicht des Lagerelementes; und
- Fig. 4:: eine perspektivische Ansicht eines Verbindungsriegels für ein Tragelement, welches in Form eines geöffneten Profils ausgebildet ist.

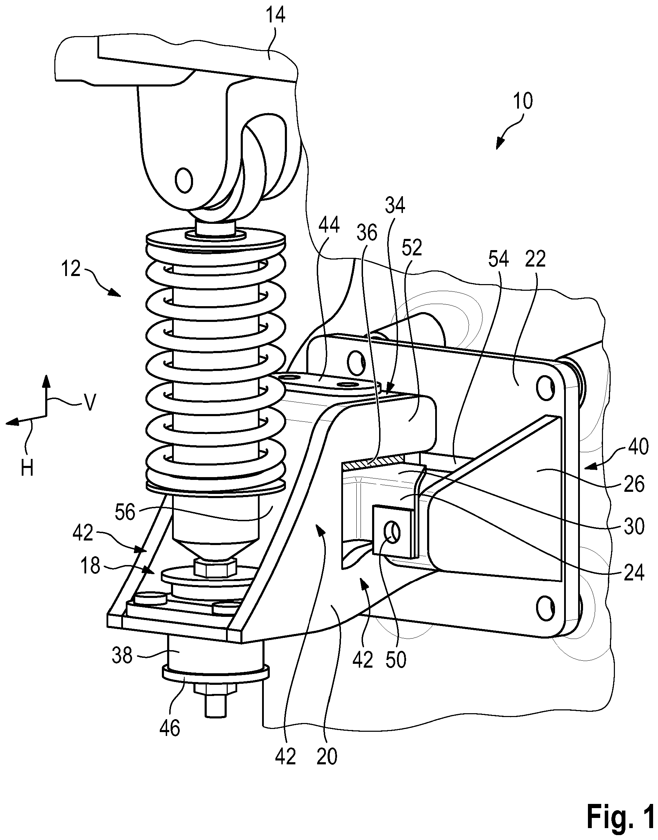

In Figur 1 ist eine perspektivische Ansicht eines Verbindungselementes 10 eines Dämpfungssystems, insbesondere für ein landwirtschaftliches Fahrzeug, dargestellt. An dem Verbindungselement 10 ist ein erstes Dämpfungsmittel 12 zur Dämpfung von im Wesentlichen vertikalen Bewegungen einer Kabine 14 gegenüber einem Fahrzeugrahmen 16 angeordnet. Das erste Dämpfungsmittel 12 ist dabei an einem Ende kabinenseitig befestigt und an einem gegenüberliegenden Ende an einem Montagebereich 18 des Verbindungselementes 10 abgestützt und mit diesem verbunden. Der Montagebereich 18 ist dabei an einem außenseitigen, von dem Fahrzeugrahmen 16 abgewandten Ende des Verbindungselementes 10 angeordnet und im Wesentlichen plan ausgebildet. Das in Figur 1 dargestellte erste Dämpfungsmittel 12 ist in Form eines Feder-Dämpfer-Elementes ausgebildet, welches besonders der Dämpfung von Schwingungen und/oder Vibrationen der Kabine 14 dienen kann.

Gemäß der Erfindung umfasst das Verbindungselement 10 neben einem Lagerelement 20 ein Tragelement 22 auf, wobei das Lagerelement 20 in im Wesentlichen horizontaler Richtung H außenseitig an dem Tragelement 22 angeordnet ist. Das Tragelement 22 ist dabei fahrzeugseitig angeordnet und an dem Fahrzeugrahmen 16 befestigt. Der Montagebereich 18 ist in horizontaler Richtung H außenseitig, an einem dem Fahrzeugrahmen abgewandten Ende, des Lagerelementes 20 ausgebildet. Das dargestellte Lagerelement 20 ist als Blechteil ausgebildet. Denkbar ist auch, dass das Lagerelement 20 als Gußbauteil oder in Gemischtbauweise, als Gußteil und Blechbauteil, hergestellt ist. Das dargestellte Tragelement 22 ist als Gußteil ausgebildet, kann aber auch als Blechbauteil oder in gemischter Bauweise ausgebildet sein.

Das Tragelement 22 ist fahrzeugseitig in einem Verbindungsbereich 40 lösbar an dem Fahrzeugrahmen 16 befestigt. Das Tragelement 22 ist in Form eines offenen, in der Draufsicht u-förmigen, Profils ausgebildet, wobei das Tragelement 22 auf einer von dem Fahrzeugrahmen 16 abgewandten Seite geöffnet ist. Das geöffnete Profil des Tragelementes 22 wird durch zwei beabstandet angeordnete seitliche Streben 26 ausgebildet. Mittels eines Verbindungsriegels 24 wird das geöffnete Profil des Tragelements 22 geschlossen. Der Verbindungsriegel 24 ist dabei jeweils an den freien Enden der seitlichen Streben 26 lösbar befestigt. Denkbar ist auch eine Ausgestaltung des Tragelementes 22 mit einem geschlossenen Profil, welches einer Draufsicht beispielsweise ringförmig ausgestaltet sein kann. Zwischen den seitlichen Streben 26 weist das Tragelement 22 eine Rippe 54 auf, welche im Wesentlichen in einer horizontalen Richtung H ausgebildet ist. Die Rippe 54 bildet dabei, insbesondere unterseitig, ein erstes Widerlager 28 aus, welches der Aufnahme und dem Zusammenwirken mit dem Lagerelement 20 dient. Der Verbindungsriegel 24 weist oberseitig ein zweites Widerlager auf, welches ebenfalls der Aufnahme und dem Zusammenwirken mit dem Lagerelement 20 dient.

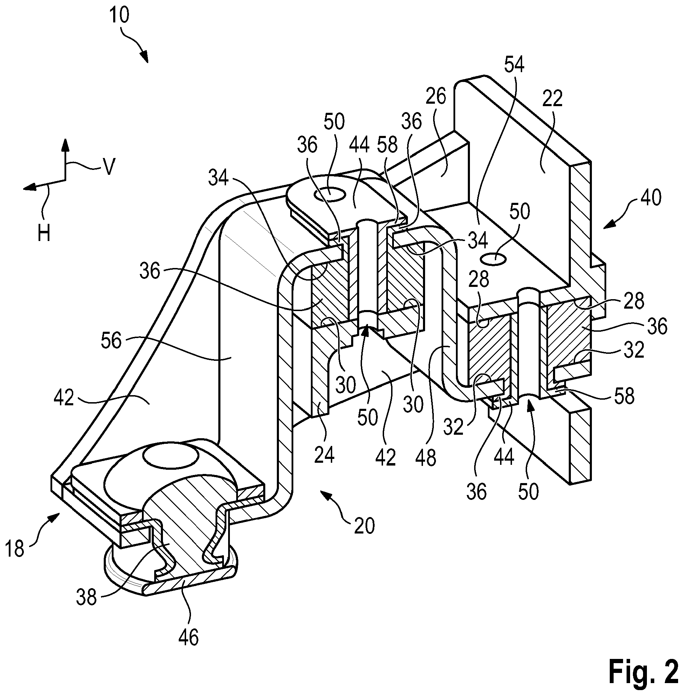

Das Lagerelement 20 (Fig. 2) weist an einem fahrzeugrahmenseitigen Ende einen ersten Befestigungsbereich 32 auf, welcher in vertikaler Richtung V nach oben weist. Der erste Befestigungsbereich 32 ist in einem montierten Zustand des Verbindungselementes 10 an dem ersten Widerlager 28 unterseitig an der Rippe 54 abgestützt und wirkt mit diesem zusammen. Zwischen dem in horizontaler Richtung H außenseitig an dem Lagerelement 20 angeordneten Montagebereich 18 und dem fahrzeugrahmenseitigen ersten Befestigungsbereich 32 ist ein zweiter Befestigungsbereich 34 angeordnet, welcher in vertikaler Richtung V nach unten weist. Dabei weist der zweite Befestigungsbereich 34 in vertikaler Richtung V im Wesentlichen in eine entgegengesetzte Richtung des ersten Befestigungsbereichs 32. Der zweite Befestigungsbereich 34 ist in einem montierten Zustand des Verbindungselementes 10 an dem zweiten Widerlager 30 oberseitig an dem Verbindungsriegel 24 abgestützt und wirkt mit diesem zusammen.

Der erste Befestigungsbereich 32 ist dabei in vertikaler Richtung V unterhalb des zweiten Befestigungsbereichs 34 angeordnet, wobei die Befestigungsbereiche 32, 34 über einen ersten Verbindungssteg 48 verbunden sind. Der Montagebereich 18 mit dem ersten Dämpfungsmittel 12 ist dabei außenseitig der Befestigungsbereiche 32, 34 an dem Lagerelement 20 angeordnet. Hierdurch wird in einem montierten Zustand des Verbindungselementes 10 bei Einwirkung von im Wesentlichen in vertikaler Richtung V wirkenden Lasten über das erste Dämpfungsmittel 12 eine selbsthemmende, insbesondere formschlüssige, Konstruktion des Verbindungselementes 10 und insbesondere des Lagerelementes 20 ermöglicht. Dies hat den Vorteil, dass keine groß dimensionierten Befestigungsmittel wie Schrauben benötigt werden. Der Montagebereich 18 ist in dem gezeigten Ausführungsbeispiel in vertikaler Richtung V unterhalb der Befestigungsbereiche 32, 34 angeordnet. Der Montagebereich 18 und der zweite Befestigungsbereich 34 sind über einen im Wesentlichen senkrecht angeordneten zweiten Verbindungssteg 56 verbunden. Der zweite Verbindungssteg 56 ist dabei in einem montierten Zustand des Verbindungselementes beabstandet zu dem Verbindungsriegel 24 angeordnet. Denkbar ist auch eine Abstützung des zweiten Verbindungsstegs 56 an dem Verbindungsriegel 24 im Wesentlichen in horizontaler Richtung H, wobei jedoch ein Dämpfungsmittel zwischen dem zweiten Verbindungssteg 56 und dem Verbindungsriegel 24 angeordnet sein sollte.

Zwischen dem Lagerelement 20 und dem Tragelement 22 ist ein zweites Dämpfungsmittel 36 angeordnet, wodurch eine Übertragung von beispielsweise Vibrationen zwischen dem Lagerelement 20 und dem Tragelement 22 verringert werden kann. In dem ersten und zweiten Befestigungsbereich 32, 34 ist das Lagerelement 20 lösbar mit dem Tragelement 22 verbunden. Zur lösbaren Befestigung des Lagerelementes 20 an dem Tragelement 22 sind Montagehülsen 33 vorgesehen, welche jeweils in den Befestigungsbereichen 32, 34 angeordnet sind. Die Montagehülsen 44 sind tragelementseitig mit Befestigungsmitteln (nicht dargestellt) wie Schrauben befestigt. Zur Aufnahme der Befestigungsmittel sind in dem Tragelement 22 Bohrungen 50 zur Aufnahme der Befestigungsmittel vorgesehen. Die Bohrungen 50 sind dabei in der Rippe 54 und dem Verbindungsriegel 24 ausgebildet.

Die Montagehülsen 44 ragen in einem montierten Zustand des Verbindungselementes 10 in vertikaler Richtung jeweils durch das Lagerelement 20 hindurch. An einem von dem Tragelement abgewandten Ende weisen die Montagehülsen 44 jeweils eine Auskragung 58 auf, welche jeweils einen formschlüssigen Anschlag für das Lagerelement 20 bilden. Dies hat den Vorteil, dass das Lagerelement in vertikaler Richtung beidseitig abgestützt werden kann. Zwischen den Montagehülsen 44 und dem Lagerelement 20 ist jeweils das zweite Dämpfungsmittel 36 angeordnet. Die Montagehülsen 44 sind unmittelbar mit dem Tragelement 22, insbesondere der Rippe 54 und dem Verbindungsriegel 24, dämpfungsmittelfrei verbunden. Eine Montagehülse 44 kann zwei parallel und benachbart angeordnete Hülsen mit Bohrungen 50 zur Aufnahme von Befestigungsmitteln wie Schrauben aufweisen. Die Hülsen können dabei durch einen gemeinsame Verbindungsplatte verbunden sein. Die Verbindungsplatte kann einstückig mit der Auskragung 58 ausgebildet sein. Zur Aufnahme des ersten Dämpfungsmittels 12 ist in dem Montagebereich 18 ein drittes Dämpfungsmittel 38 vorgesehen, welches beispielsweise in Form eines elastischen Gummidämpfers ausgebildet ist, der in das Lagerelement 20 eingelassen ist. Bodenseitig des Montagebereiches 18 und unterseitig des Lagerelementes 20 ist an dem dritten Dämpfungsmittel 38 ein Sicherungselement 46 vorgesehen, welches ein lösen des ersten und/oder dritten Dämpfungsmittels 12, 38 in vertikaler Richtung V nach oben verhindert.

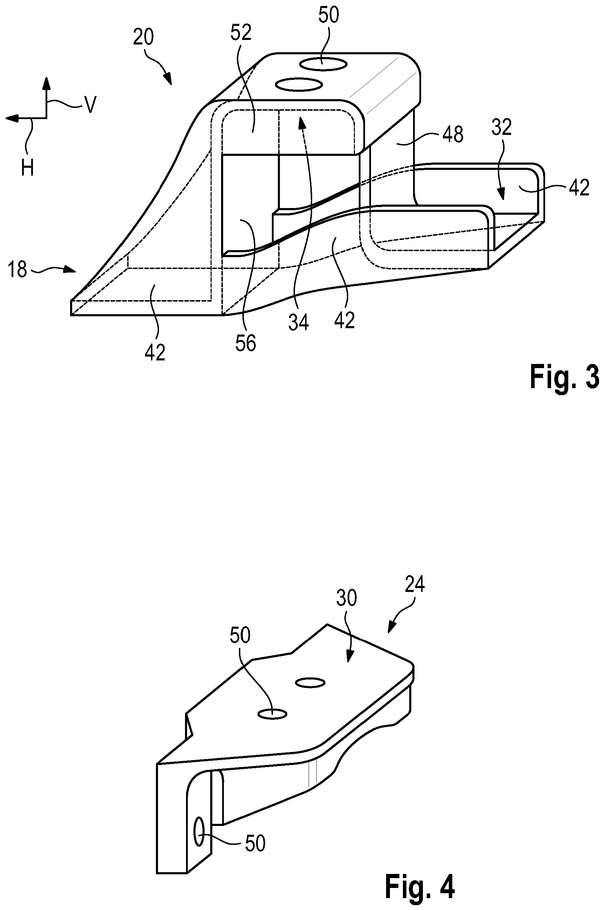

In Figur 3 ist das Lagerelement 20 in einer perspektivischen Darstellung gezeigt. Der fahrzeugrahmenseitige erste Befestigungsbereich 32 ist in vertikaler Richtung V zwischen dem Montagebereich 18 und dem zweiten Befestigungsbereich 34 angeordnet. Zwischen dem Montagebereich 18 und dem zweiten Befestigungsbereich 34 erstreckt sich, insbesondere beidseitig, eine Verstrebung 42, welche auch entlang der zweiten Verbindungsstrebe 56 ausgebildet sein kann. Die Verstrebung 42 erstreckt sich über die erste Verbindungsstrebe 48 seitlich entlang des ersten Befestigungsbereich 32, wobei die Verstrebung 42 im Bereich des zweiten Befestigungsbereiches 34 in vertikaler Richtung V beabstandet zu diesem ausgebildet ist. Dadurch wird durch das Lagerelement 20, insbesondere den zweiten Befestigungsbereich34, den ersten und zweiten Verbindungssteg 48, 56 und die seitliche Verstrebung 42, eine geschlossene Struktur gebildet, welche den Verbindungsriegel (nicht dargestellt) umschließt. Dies hat den Vorteil, dass hierdurch eine Verliersicherung für das Lagerelement 20 ausgebildet werden kann.

In dem Bereich des zweiten Befestigungsbereiches 34 ist, insbesondere in vertikaler Richtung V unterseitig, mindestens eine seitliche Verstärkung 52 angeordnet, welche im Wesentlichen in einer Ebene und/oder einstückig mit der Verstrebung 42 ausgebildet sein kann. In dem ersten Befestigungsbereich 32 und dem zweiten Befestigungsbereich 34 sind Bohrungen 50 zur Aufnahme vom Montagehülsen (nicht dargestellt) angeordnet. Der Verbindungsriegel 24 (Fig. 4) weist eine längliche Erstreckung und endseitig Bohrungen 50 zur endseitigen Verbindung mit den seitlichen Streben 26 auf. Die Bohrungen 50 sind dabei im Wesentlichen in einer horizontalen Richtung H angeordnet, und können so eine stirnseitige Befestigung des Verbindungsriegels 24 an den seitlichen Streben (nicht dargestellt) ermöglichen. Denkbar ist auch eine, insbesondere unter Einwirkung einer im vertikalen Kraft, im Wesentlichen formschlüssige Verbindung, bei der der Verbindungsriegel 24 oberseitig auf den seitlichen Streben (nicht dargestellt) angeordnet sein kann. Die hätte den Vorteil einer besseren Krafteinleitung in die seitlichen Streben. Oberseitig weist der Verbindungsriegel 24 eine Fläche auf, welche das zweite Widerlager 30 für den zweiten Befestigungsbereich 34 bildet. In dem zweiten Widerlager 30 sind Bohrungen 50 zur Befestigung einer Montagehülse (nicht dargestellt) vorgesehen.

### Bezugszeichenliste

- 10: Verbindungselement
- 12: erstes Dämpfungsmittel
- 14: Kabine
- 16: Fahrzeugrahmen
- 18: Montagebereich
- 20: Lagerelement
- 22: Tragelement
- 24: Verbindungsriegel
- 26: Strebe
- 28: erstes Widerlager
- 30: zweites Widerlager
- 32: erster Befestigungsbereich
- 34: zweiter Befestigungsbereich
- 36: zweites Dämpfungsmittel
- 38: drittes Dämpfungsmittel
- 40: Verbindungsbereich
- 42: Verstrebung
- 44: Montagehülse
- 46: Sicherungselement
- 48: erster Verbindungssteg
- 50: Bohrung
- 52: Verstärkung
- 54: Rippe
- 56: zweiter Verbindungssteg
- 58: Auskragung

- V: vertikale Richtung
- H: horizontale Richtung

## Patentansprüche

1. Verbindungselement für ein Dämpfungssystem zur Lagerung einer Kabine (14), insbesondere eines landwirtschaftlichen Fahrzeuges, mit einem Lagerelement (20) mit einem Montagebereich (18) zur Aufnahme eines mit der Kabine (14) verbindbaren ersten Dämpfungsmittels (12) zur Dämpfung einer Bewegung der Kabine (14) gegenüber einem Fahrzeugrahmen (16), und einem fahrzeugseitigen Tragelement (22), an dem das Lagerelement (20) in montiertem Zustand angeordnet ist, wobei das Lagerelement (20) einen ersten Befestigungsbereich (32) und einen zweiten Befestigungsbereich (34) aufweist, welche in einem montierten Zustand mit dem Tragelement (22) verbunden sind, **dadurch gekennzeichnet, dass** der erste Befestigungsbereich (32) und der zweite Befestigungsbereich (34) derart angeordnet und ausgebildet sind, dass diese, insbesondere in vertikaler Richtung (V), in entgegengesetzte Richtungen weisen, sodass der erste Befestigungsbereich (32), der zweite Befestigungsbereich (34) und/oder der Montagebereich (18) des Lagerelementes (20) im Wesentlichen in horizontaler Richtung (H) versetzt zueinander angeordnet sind, wobei der erste Befestigungsbereich (32) in vertikaler Richtung unterhalb des zweiten Befestigungsbereiches (34) angeordnet ist.

2. Verbindungselement nach Anspruch 1, **dadurch gekennzeichnet, dass** der Montagebereich (18) in Vertikaler Richtung auf gleicher Höhe, oberhalb oder unterhalb des ersten und/oder zweiten Befestigungsbereiches (32, 34) angeordnet ist.

3. Verbindungselement nach einem der vorherigen Ansprüche, **dadurch gekennzeichnet, dass** das Lagerelement (20) mindestens an einer Seite eine Verstrebung (42) aufweist, welche sich zumindest teilweise entlang des ersten Befestigungsbereiches (32), des zweiten Befestigungsbereiches (34) und/oder des Montagebereiches (18) erstreckt.

4. Verbindungselement nach Anspruch 3, **dadurch gekennzeichnet, dass** die Verstrebung (42) den ersten Befestigungsbereich (32) und den Montagebereich (18) verbindend ausgebildet ist, wobei insbesondere die Verstrebung (42) beabstandet zu dem zweiten Befestigungsbereich (34) verläuft.

5. Verbindungselement nach einem der vorherigen Ansprüche, **dadurch gekennzeichnet, dass** ein Verbindungssteg (48) vorgesehen ist, welcher den Montagebereich (18), den ersten Befestigungsbereich (32) und/oder den zweiten Befestigungsbereich (34), insbesondere in einer vertikalen Richtung (V), verbindet.

6. Verbindungselement nach einem der vorherigen Ansprüche, **dadurch gekennzeichnet, dass** das Tragelement (22) lösbar mit dem Fahrzeugrahmen (16) verbindbar oder einstückig mit dem Fahrzeugrahmen (16) ausgebildet ist.

7. Verbindungselement nach einem der vorherigen Ansprüche, **dadurch gekennzeichnet, dass** das Tragelement (22) in Form eines geschlossenen oder geöffneten, insbesondere U-förmigen, Profils ausgebildet ist.

8. Verbindungselement nach einem der vorherigen Ansprüche, **dadurch gekennzeichnet, dass** das Tragelement (22) in Form eines geöffneten, insbesondere U-förmigen, Profils einen Verbindungsriegel (24) zum Schließen des Profils aufweist, wobei insbesondere der Verbindungsriegel (24) mit dem zweiten Befestigungsbereich (34) zusammenwirkt.

9. Verbindungselement nach einem der vorherigen Ansprüche, **dadurch gekennzeichnet, dass** zwischen dem Lagerelement (20) und dem Tragelement (22) mindestens ein zweites Dämpfungsmittel (36) angeordnet ist.

10. Verbindungselement nach einem der vorherigen Ansprüche, **dadurch gekennzeichnet, dass** das Lagerelement (20) und/oder das Tragelement (22) vollständig oder zumindest teilweise in Form eines Blechbauteils und/oder eines Gussbauteils ausgebildet ist.

11. Landwirtschaftliches Fahrzeug, insbesondere Traktor mit einem Fahrzeugrahmen (16) und einer an daran gelagerten Kabine (14), **dadurch gekennzeichnet, dass** zur Lagerung der Kabine (14) mindestens ein Verbindungselement (10) nach einem der Ansprüche 1 bis 10 vorgesehen ist.

## Claims

1. A connecting element for a damping system for mounting a cab (14), in particular of an agricultural vehicle, having a mounting element (20) with a fitting region (18) for receiving a first damping means (12) which can be connected to the cab (14) in order to damp a movement of the cab (14) with respect to a vehicle frame (16), and a support element (22) on the vehicle side, on which the mounting element (20) is disposed when in the fitted condition, wherein the mounting element (20) has a first fastening region (32) and a second fastening region (34) which are connected to the support element (22) when in the fitted condition, **characterized in that** the first fastening region (32) and the second fastening region (34) are disposed and constructed in a manner such that they face in opposite directions, in particular in the vertical direction (V), so that the first fastening region (32), the second fastening region (34) and/or the fitting region (18) of the mounting element (20) are disposed offset with respect to each other substantially in the horizontal direction (H), wherein the first fastening region (32) is disposed below the second fastening region (34) in the vertical direction.

2. The connecting element according to claim 1, **characterized in that** in the vertical direction, the fitting region (18) is disposed at the same height, above, or below the first and/or second fastening region (32, 34).

3. The connecting element according to one of the preceding claims, **characterized in that** the mounting element (20) has a brace (42) on at least one side, the brace extending at least in part along the first fastening region (32), the second fastening region (34) and/or the fitting region (18).

4. The connecting element according to claim 3, **characterized in that** the brace (42) is configured so as to connect the first fastening region (32) and the fitting region (18), wherein in particular, the brace (42) extends at a distance from the second fastening region (34).

5. The connecting element according to one of the preceding claims, **characterized in that** a connecting web (48) is provided which connects the fitting region (18), the first fastening region (32) and/or the second fastening region (34), in particular in a vertical direction (V).

6. The connecting element according to one of the preceding claims, **characterized in that** the support element (22) can be releasably connected to the vehicle frame (16) or is integrally formed with the vehicle frame (16).

7. The connecting element according to one of the preceding claims, **characterized in that** the support element (22) is configured in the form of a closed or open, in particular U-shaped, profile.

8. The connecting element according to one of the preceding claims, **characterized in that** the support element (22) in the form of an open, in particular U-shaped, profile has a connecting bar (24) for closing the profile, wherein in particular, the connecting bar (24) cooperates with the second fastening region (34).

9. The connecting element according to one of the preceding claims, **characterized in that** at least one second damping means (36) is disposed between the mounting element (20) and the support element (22).

10. The connecting element according to one of the preceding claims, **characterized in that** the mounting element (20) and/or the support element (22) is formed entirely or at least in part in the form of a sheet metal component and/or a cast component.

11. An agricultural vehicle, in particular a tractor with a vehicle frame (16) and a cab (14) mounted thereon, **characterized in that** at least one connecting element (10) according to one of claims 1 to 10 is provided in order to mount the cab (14).

## Revendications

1. Élément de liaison pour un système d'amortissement pour donner appui à une cabine (14), en particulier d'un véhicule agricole, comprenant un élément d'appui (20) avec une zone de montage (18) pour recevoir un premier moyen d'amortissement (12) reliable à la cabine (14) afin d'amortir un déplacement de la cabine (14) par rapport à un bâti de véhicule (16), et comprenant un élément porteur côté véhicule (22) sur lequel l'élément d'appui (20) est disposé à l'état monté, l'élément d'appui (20) comportant une première zone de fixation (32) et une seconde zone de fixation (34), lesquelles sont reliées à l'élément porteur (22) à l'état monté, **caractérisé en ce que** la première zone de fixation (32) et la seconde zone de fixation (34) sont disposées et conçues de façon à être orientées dans des directions opposées, en particulier dans la direction verticale (V), de façon que la première zone de fixation (32), la seconde zone de fixation (34) et/ou la zone de montage (18) de l'élément d'appui (20) soient disposées de manière décalée l'une par rapport à l'autre dans la direction horizontale (H), la première zone de fixation (32) étant disposée, dans la direction verticale, au-dessous de la seconde zone de fixation (34).

2. Élément de liaison selon la revendication 1, **caractérisé en ce que** la zone de montage (18) est disposée, dans la direction verticale, à la même hauteur, au-dessus ou au-dessous de la première et/ou seconde zone de fixation (32, 34).

3. Élément de liaison selon une des revendications précédentes, **caractérisé en ce que** l'élément d'appui (20) comporte, au moins sur un côté, un entretoisement (42) qui s'étend au moins en partie le long de la première zone de fixation (32), de la seconde zone de fixation (34) et/ou de la zone de montage (18).

4. Élément de liaison selon la revendication 3, **caractérisé en ce que** l'entretoisement (42) est conçu pour relier la première zone de fixation (32) et la zone de montage (18), en particulier l'entretoisement (42) s'étendant à distance de la seconde zone de fixation (34).

5. Élément de liaison selon une des revendications précédentes, **caractérisé en ce qu'**il est prévu une patte de liaison (48) qui relie la zone de montage (18), la première zone de fixation (32) et/ou la seconde zone de fixation (34), en particulier dans une direction verticale (V).

6. Élément de liaison selon une des revendications précédentes, **caractérisé en ce que** l'élément porteur (22) est conçu de façon détachable du bâti de véhicule (16), de façon reliable ou d'une seule pièce avec le bâti de véhicule (16).

7. Élément de liaison selon une des revendications précédentes, **caractérisé en ce que** l'élément porteur (22) est conçu sous la forme d'un profil fermé ou ouvert, en particulier en forme de U.

8. Élément de liaison selon une des revendications précédentes, **caractérisé en ce que** l'élément porteur (22) en forme de profil ouvert, en particulier en forme de U, comporte une bride de liaison (24) pour fermer le profil, en particulier la bride de liaison (24) coopérant avec la seconde zone de fixation (34).

9. Élément de liaison selon une des revendications précédentes, **caractérisé en ce qu'**entre l'élément d'appui (20) et l'élément porteur (22) est disposé au moins un second moyen d'amortissement (36).

10. Élément de liaison selon une des revendications précédentes, **caractérisé en ce que** l'élément d'appui (20) et/ou l'élément porteur (22) sont conçus entièrement ou au moins en partie sous la forme d'une pièce en tôle et/ou d'une pièce en fonte.

11. Véhicule agricole, en particulier tracteur comprenant un bâti de véhicule (16) et une cabine (14) prenant appui dessus, **caractérisé en ce que** pour l'appui de la cabine (14) étant prévu au moins un élément de liaison (10) selon une des revendications 1 à 10.
